# FASCICULE DE BREVET EUROPEEN

(11) **EP 0 729 038 B1**
(45) Date de publication et mention de la délivrance du brevet: **05.12.2001**
(21) Numéro de dépôt: 96400327.1
(22) Date de dépôt: 16.02.1996
(51) Int. Cl.: G01S 13/84

(54) **Dispositif de localisation d'un véhicule se déplaçant le long de moyens de propagation d'ondes électromagnétiques**
Vorrichtung zum Orten von Fahrzeugen die sich entlang von Wellen-Ausbreitungsmitteln bewegen
Device for locating a vehicle moving along wave propagation media

(30) Priorité: 21.02.1995 FR 9501983
(43) Date de publication de la demande: 28.08.1996
(73) Titulaire: GEC ALSTHOM TRANSPORT SA, 75016 Paris (FR)
(72) Inventeur: Fournier, Denis A., F-92320 Chatillon (FR)
(74) Mandataire: Gosse, Michel

(56) Documents cités:
- WO-A-87/03698
- DE-A- 3 124 068
- GB-A- 2 270 438

## Description

La présente invention concerne les systèmes de transport notamment à conduite entièrement automatique, en général, et porte, plus particulièrement, sur un dispositif de localisation d'un véhicule se déplaçant le long de moyens de propagation d'ondes électromagnétiques.

Le système de transmission conforme à la présente invention, désigné sous le nom de système IAGO, pour Informatisation et Automatisation par Guide d'Ondes, est basé sur l'utilisation d'un guide d'ondes rayonnant.

Ce système de transmission permet une communication continue bidirectionnelle à haut débit d'informations entre un équipement fixe et un équipement mobile.

Le guide d'ondes rayonnant est un médium de transmission en aluminium placé le long de la voie.

Le guide d'ondes rayonnant véhicule les informations issues du sol ou du mobile à des fréquences appartenant à la bande des applications industrielles, scientifiques et médicales comprise entre 2,4 à 2,5 Ghz.

Outre la transmission d'informations, ce système de transmission permet de connaître la vitesse vraie du mobile ainsi que sa position absolue le long de la voie.

Les dispositifs de localisation d'un mobile par rapport au sol de l'art antérieur sont basés sur le principe de la lecture par le mobile d'un code binaire gravé sur un guide d'onde.

Ce code est réalisé par une disposition judicieuse par rapport au réseau de symboles de localisation composés de fentes sectorales servant à la transmission des informations.

Un tel système de localisation est décrit dans le brevet FR 2 680 876 "Système de localisation par ondes electromagnétiques hyperfréquences" de la demanderesse.

Un symbole, correspondant à un bit du code, est constitué d'une fente longitudinale.

La lecture de ces symboles se fait par la mesure du déphasage entre les signaux issus de deux antennes placées sous le mobile.

La distinction entre un symbole et son complémentaire est réalisée par la disposition d'une fente longitudinale par rapport aux fentes sectorales voisines.

L'information correspondant à l'instant d'acquisition de la valeur de déphasage est obtenue à partir des signaux captés à une fréquence égale à 2,7 Ghz.

Ainsi, pour une acquisition de mesure effectuée pour un symbole donné, la position des antennes de localisation par rapport aux symboles donne un déphasage positif ou négatif correspondant à un bit ou son complémentaire.

Un but de l'invention est un dispositif de communication entre un poste de commande et/ou de contrôle et un véhicule se déplaçant le long de moyens de propagation permettant une localisation des véhicules, notamment des véhicules ferroviaires, avec une très grande précision dans les buts indiqués ci-dessous.

Un autre but du dispositif de communication selon l'invention est de résoudre les problèmes dit de "tir au but" précis dans le cas particulier de quais équipés de portes palières.

Un autre but du dispositif de communication selon l'invention est de diminuer l'intervalle entre deux trains permettant un fonctionnement selon le principe dit du "canton mobile déformable".

Le principe du canton mobile est basé sur le fait que la voie n'est plus divisée géographiquement de manière à définir une suite de cantons fixes indéformables mais est organisée virtuellement de manière à définir une suite de cantons mobiles.

De plus, cette suite de cantons mobiles se compose de cantons déformables du fait que le début et la fin de chacun des cantons ont des positions susceptibles d'évoluer.

En d'autres termes, le principe du canton mobile déformable se base sur le fait que l'arrière du véhicule qui précède devient le point but pour le véhicule qui suit.

Un intérêt d'un tel principe de cantons mobiles déformables réside dans la possibilité de réduire l'intervalle entres véhicules.

Un autre but du dispositif de communication selon l'invention est de permettre le retournement automatique des véhicules.

Un autre but du dispositif de communication selon l'invention est d'initialiser les véhicules à l'arrêt pour des fonctions du type retournement automatique ou garage/dégarage automatiques.

Conformément à l'invention, le dispositif de localisation d'un véhicule V se déplaçant le long de moyens de propagation P d'ondes électromagnétiques, comprend:
- des moyens d'émission E d'ondes électromagnétiques émises Σₑ,
- des moyens de réflexion R' desdites ondes électromagnétiques émises Σ_{e,}
- des moyens de réception R des ondes électromagnétiques réfléchies Σᵣ par lesdits moyens de réflexion R',
- des moyens de comparaison C desdites ondes électromagnétiques émises Σₑ et desdites ondes électromagnétiques réfléchies Σᵣ, et
- des moyens de traitement T du résultat obtenu par lesdits moyens de comparaison C permettant de déterminer la distance D entre ledit véhicule V et lesdits moyens de réflexion R',
lesdits moyens de propagation P desdites ondes électromagnétiques émises Σₑ et desdites ondes électromagnétiques réfléchies Σᵣ étant des moyens de propagation rayonnants.

Le dispositif de localisation d'un véhicule se déplaçant le long de moyens de propagation de l'invention selon un premier mode de réalisation préféré satisfait aux caractéristiques suivantes:
- lesdits moyens d'émission E desdites ondes électromagnétiques émises Σₑ et lesdits moyens de réception R desdites ondes électromagnétiques réfléchies Σ_{r,} lesdits moyens de comparaison C et lesdits moyens de traitement T sont supportés par ledit véhicule V, et
- lesdits moyens de réflexion R' desdites ondes électromagnétiques émises Σₑ sont associés auxdits moyens de propagation P et sont disposés au sol.

Le dispositif de localisation d'un véhicule se déplaçant le long de moyens de propagation de l'invention selon un autre mode de réalisation préféré satisfait aux caractéristiques suivantes:
- lesdits moyens d'émission E desdites ondes électromagnétiques émises Σₑ et lesdits moyens de réception R desdites ondes électromagnétiques réfléchies Σ_{r,} lesdits moyens de comparaison C et lesdits moyens de traitement T sont associés auxdits moyens de propagation P et sont disposés au sol, et
- lesdits moyens de réflexion R' desdites ondes électromagnétiques émises Σₑ sont supportés par ledit véhicule V.

Le dispositif de localisation d'un véhicule se déplaçant le long de moyens de propagation de l'invention satisfait également à l'une des caractéristiques suivantes:
- lesdits moyens d'émission E sont des moyens d'émission radar,
- lesdites ondes électromagnétiques émises Σₑ et réfléchies Σᵣ sont des ondes radars,
- lesdites ondes électromagnétiques émises Σₑ se composent d'une onde porteuse émise d'amplitude constante et modulée en fréquence et dans lequel lesdites ondes électromagnétiques réfléchies Σᵣ se composent' d'une onde porteuse réfléchie modulée en fréquence,
- les moyens de réflexion R' sont susceptibles de transposer en fréquence ladite onde porteuse émise composant lesdites ondes électromagnétiques émises Σₑ,
- le traitement par les moyens de traitement T du résultat obtenu par lesdits moyens de comparaison C porte sur une mesure de différence de phase entre ladite onde porteuse émise et ladite onde porteuse réfléchie.

Un avantage du dispositif de localisation d'un véhicule se déplaçant le long de moyens de propagation de l'invention est l'utilisation d'un guide de propagation rayonnant de moindre coût et de pose et de maintenance simplifiées.

Un autre avantage du dispositif de localisation d'un véhicule se déplaçant le long de moyens de propagation de l'invention est que le système peut aussi bien fonctionner avec un moyen de propagation rayonnant du type câble rayonnant ou guide d'ondes rayonnant.

Un autre avantage du dispositif de localisation d'un véhicule se déplaçant le long de moyens de propagation de l'invention est que dans le cas de l'utilisation d'un guide d'ondes, le gabarit de déplacement vertical et horizontal de l'équipement embarqué, par rapport aux moyens de propagation, est beaucoup plus important ce qui permet d'installer le système embarqué sur la caisse du véhicule et non plus obligatoirement sur le bogie.

Un autre avantage du dispositif de localisation d'un véhicule se déplaçant le long de moyens de propagation de l'invention est qu'il n'est plus nécessaire de garer le véhicule à des positions précises au dessus de balises pour les fonctions de retournement ou de garage/dégarage.

D'autres buts, caractéristiques et avantages de l'invention apparaîtront à la lecture de la description des modes de réalisation préférés du dispositif de localisation d'un véhicule se déplaçant le long de moyens de propagation, description faite en liaison avec les dessins dans lesquels:
- la figure 1 est une vue schématique d'ensemble d'un dispositif de localisation d'un véhicule se déplaçant le long de moyens de propagation conforme à l'invention,
- la figure 2 est une représentation synoptique d'un premier mode de réalisation préféré du dispositif de localisation d'un véhicule se déplaçant le long de moyens de propagation,
- la figure 3 est une représentation synoptique d'un autre mode de réalisation préféré du dispositif de localisation d'un véhicule se déplaçant le long de moyens de propagation.

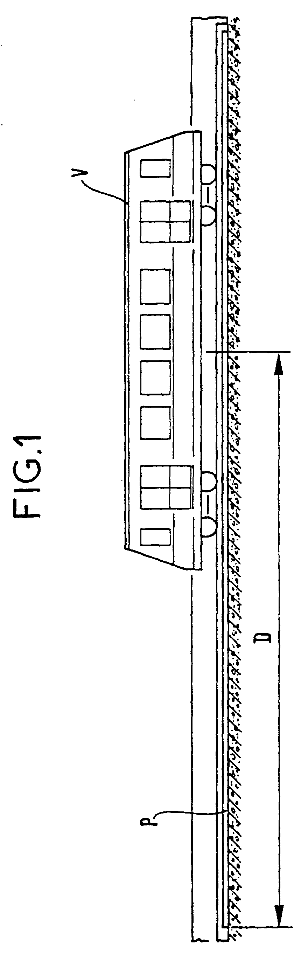

La figure 1 est une vue schématique d'ensemble d'un dispositif de localisation d'un véhicule V se déplaçant le long de moyens de propagation P conforme à l'invention.

Comme indiqué précédemment, le dispositif de l'invention a pour but de déterminer la position du véhicule V c'est à dire de déterminer la distance D séparant le véhicule V d'un point donné des moyens de propagation P.

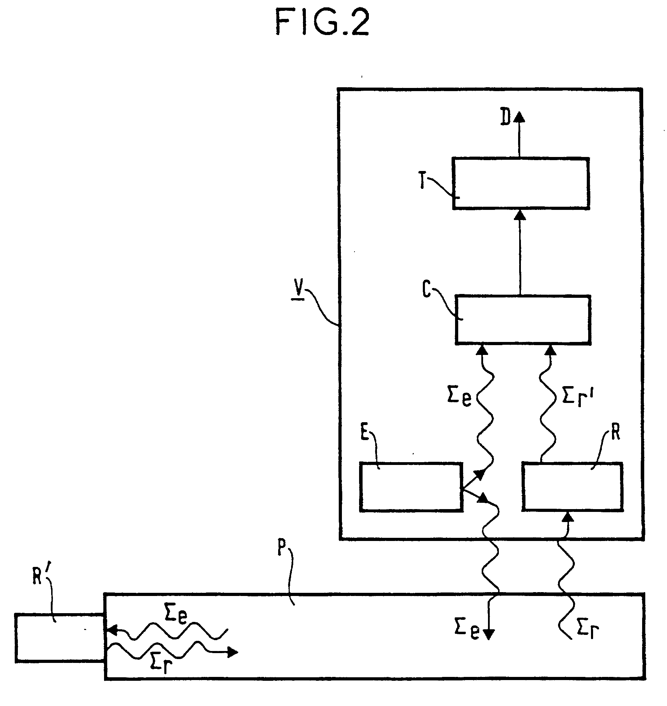

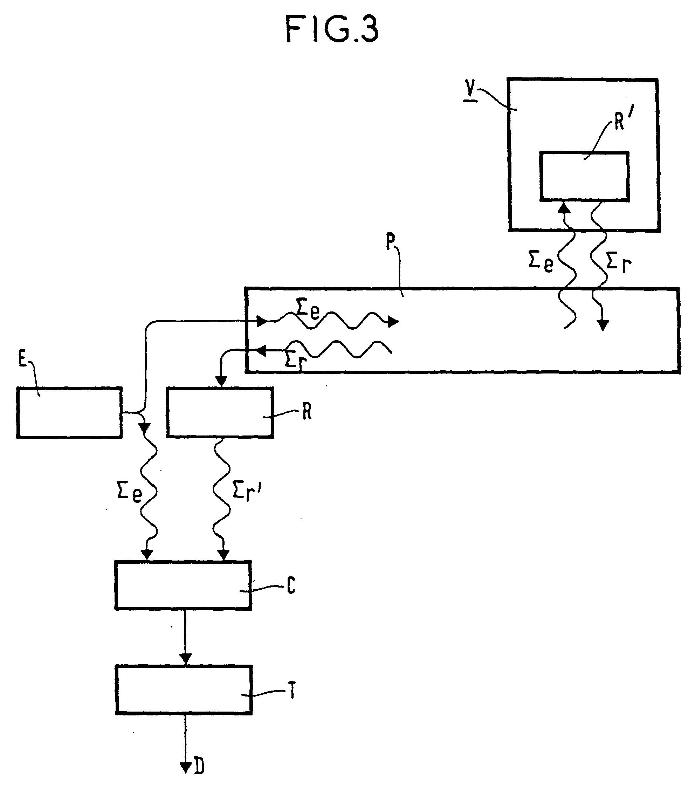

Conformément à l'invention et aux représentations synoptiques des figures 2 et 3, le dispositif de localisation d'un véhicule V se déplaçant le long de moyens de propagation P, comprend des moyens d'émission E d'ondes électromagnétiques Σₑ susceptibles de se propager dans les moyens de propagation P et des moyens de réception R.

Le dispositif de localisation comprend également des moyens de réflexion R' des ondes électromagnétiques Σₑ en direction des moyens de réception R,

Des moyens de comparaison C compare les ondes électromagnétiques émises Σₑ et les ondes électromagnétiques réfléchies Σᵣ par lesdits moyens de réflexion R'.

Le résultat obtenu par les moyens de comparaison C permet de calculer la distance D entre le véhicule V et les moyens de réflexion R', ceci par l'intermédiaire de moyens de traitement T.

Les moyens de propagation P des ondes électromagnétiques émises Σₑ et des ondes électromagnétiques réfléchies Σᵣ sont des moyens de propagation rayonnants quelle que soit la position spatiale des moyens d'émission E et des moyens de réception R le long des moyens de propagation P.

La figure 2 est une représentation synoptique du premier mode de réalisation préféré du dispositif de localisation d'un véhicule se déplaçant le long de moyens de propagation.

Le dispositif de localisation d'un véhicule V selon ce premier mode de réalisation comprend des moyens d'émission E d'ondes électromagnétiques Σₑ susceptibles de se propager dans les moyens de propagation P et des moyens de réception R.

Les moyens d'émission E des ondes électromagnétiques Σ ₑ et les moyens de réception R sont supportés par le véhicule V.

Les moyens de réflexion R' des ondes électromagnétiques Σₑ sont associés aux moyens de propagation P de manière à réfléchir les ondes électromagnétiques Σₑ en direction des moyens de réception R.

Les moyens de réflexion R' et les moyens de réception R sont tous deux, de préférence, des moyens du type hétérodyne, c'est à dire que la réflexion des ondes émises Σ ₑ s'effectue avec un changement de fréquence pour donner des ondes réfléchies Σᵣ et que la réception de ces ondes réfléchies Σᵣ s'effectue avec le même changement de fréquence inverse pour donner des ondes reçues Σ_{r'}.

Ces différents changement de fréquence ont comme intérêt de permettre une réception sélective par les moyens de réception R. En particulier, les ondes issues des ondes émises Σₑ par les moyens d'émission E qui sont réfléchies sur les moyens de propagation P, au lieu d'être injectées dans ces moyens de propagation P, ne seront pas pris en compte par les moyens de réception R du fait qu'elles ne sont pas à la fréquence désirée.

Les moyens de réflexion R' sont disposés au sol.

Les moyens de comparaison C comparent les ondes électromagnétiques émises Σₑ et les ondes électromagnétiques reçues Σ_{r'} par les moyens de réception R.

Le résultat obtenu par les moyens de comparaison C permet de calculer la distance D entre le véhicule V et les moyens de réflexion R' par l'intermédiaire de moyens de traitement T.

Ces moyens de comparaison C et ces moyens de traitement T sont supportés par le véhicule V.

La figure 3 est une représentation synoptique d'un autre mode de réalisation préféré du dispositif de localisation d'un véhicule se déplaçant le long de moyens de propagation.

Le dispositif de localisation selon cet autre mode de réalisation comprend des moyens d'émission E d'ondes électromagnétiques Σₑ susceptibles de se propager dans les moyens de propagation P et des moyens de réception R.

Les moyens d'émission E des ondes électromagnétiques Σ ₑ et les moyens de réception R sont disposés au sol et sont associés aux moyens de propagation P.

Des moyens de réflexion R' des ondes électromagnétiques Σₑ sont disposés dans le véhicule V de manière à réfléchir les ondes électromagnétiques Σₑ en direction des moyens de réception R.

Des moyens de comparaison C comparent les ondes électromagnétiques émises Σₑ et les ondes électromagnétiques reçues Σ_{r'} par les moyens de réception R.

Le résultat obtenu par les moyens de comparaison C permet de calculer la distance D entre le véhicule V et les moyens de récepion R par l'intermédiaire de moyens de traitement T.

D'une manière générale et quel que soit le mode de réalisation choisi, les moyens d'émission E et,les moyens de récepion R sont avantageusement des moyens d'émission radar et des moyens de récepion radar, respectivement.

Il résulte de ce qui précède que les ondes électromagnétiques émises Σₑ sont des ondes radar.

La description qui suit porte sur un dispositif de localisation selon l'invention, conforme au premier mode de réalisation, composé de moyens d'émission radar et d'un guide d'onde rayonnant.

Cette description a pour but de mieux comprendre la mise en oeuvre du dispositif de localisation de l'invention.

Les moyens d'émission radar embarqués injectent dans le guide d'ondes une onde porteuse. L'onde porteuse se propage dans le guide jusqu'aux extrémités du guide.

Un transducteur, installé à l'une des extrémités du guide, capte l'onde porteuse émise. Le transducteur est un transducteur du type hétérodyne permettant de transposer en fréquence l'onde porteuse. Le transducteur réémet l'onde porteuse dans le guide.

L'onde porteuse transposée se propage dans le guide vers le véhicule et est reçue par les moyens de réception radar embarqués. Les moyens de réception radar embarqués sont des moyens de réception du type hétérodyne permettant de retransposer cette onde porteuse vers sa fréquence initiale. Des moyens de comparaison comparent l'onde porteuse émise avec l'onde porteuse réfléchie après que l'onde porteuse réfléchie soit remise à la fréquence de l'onde porteuse émise.

La mesure porte, par exemple, sur la différence de phase entre l'onde porteuse émise avec l'onde porteuse réfléchie. La différence de phase est liée à la distance D parcourue par les ondes.

Cette opération est de préférence faite pour un grand nombre de fréquences. Ces mesures permettent d'obtenir un tableau de nombres complexes (amplitude et phase).

Par transformée de Fourier, appliquée au tableau de nombres complexes, on passe du domaine fréquentiel au domaine temporel.

Sur le tableau transposé du domaine fréquentiel au domaine temporel on lit la réponse impulsionnelle du système. On détermine le temps de propagation des ondes en observant la position du pic de la réponse impulsionnelle.

Connaissant la vitesse de propagation des ondes dans le guide d'ondes, on calcule la position du véhicule.

Une autre solution consiste à travailler dans le domaine temporel et non plus dans le domaine fréquentiel.

Il est évident que le dispositif de la présente invention est susceptible d'être utilisé en propagation aérienne avec des transpondeurs placés le long de la voie. Toutefois des phénomènes liés à la présence de chemins multiples diminuerons la précision.

Les moyens de propagation peuvent être, par exemple, un guide rayonnant ou encore un câble rayonnant sous réserve de disposer de bandes de fréquences suffisantes.

## Revendications

1. Dispositif de communication permettant la localisation d'un véhicule V se déplaçant le long de moyens de propagation P d'ondes électromagnétiques, comprenant :
- des moyens d'émissions E d'ondes électromagnétiques émises Σₑ,
- des moyens de réflexion R' desdites ondes électromagnétiques émises Σ_{e,}
- des moyens de réception R des ondes électromagnétiques réfléchies Σᵣ par lesdits moyens de réflexion R',
- des moyens de comparaison C desdites ondes électromagnétiques émises Σₑ et desdites ondes électromagnétiques issues desdits moyens de réception R.
- des moyens de traitement T du résultat obtenu par lesdits moyens de comparaison C permettant de déterminer la distance D entre ledit véhicule V et lesdits moyens de réflexion R',
lesdits moyens de propagation P desdites ondes électromagnétiques émises Σₑ et desdites ondes électromagnétiques réfléchies Σᵣ étant des moyens de propagation rayonnants, ledit dispositif étant **caractérisé en ce que** :
- lesdites ondes électromagnétiques émises Σₑ se composent d'une onde porteuse émise d'amplitude constante et modulée en fréquence et dans lequel lesdites ondes électromagnétiques réfléchies Σᵣ se composent d'une onde porteuse réfléchie modulée en fréquence,
- les moyens de réflexion R' transposent en fréquence l'onde porteuse desdites ondes électromagnétiques émises Σₑ pour donner lesdites ondes réfléchies Σᵣ,
- les moyens de réception R transposent l'onde porteuse desdites ondes électromagnétiques réfléchies Σᵣ vers sa fréquence initiale pour donner des ondes électromagnétiques reçues Σᵣ' par les moyens de traitement T,
- le traitement par les moyens de traitement T du résultat obtenu par lesdits moyens de comparaison C porte sur une mesure de différence de phase entre l'onde porteuse desdites ondes électromagnétiques émises Σₑ et l'onde porteuse desdites ondes électromagnétiques reçues Σ_{r'}.

2. Dispositif de communication selon la revendication 1, dans lequel :
- lesdits moyens d'émission E desdites ondes électromagnétiques émises Σₑ et lesdits moyens de réception R desdites ondes électromagnétiques réfléchies Σᵣ, lesdits moyens de comparaison C et lesdits moyens de traitement T sont supportés par ledit véhicule V et
- lesdits moyens de réflexion R' desdites ondes électromagnétiques émises Σₑ sont associés audits moyens de propagation rayonnants P et sont disposés au sol.

3. Dispositif de communication selon la revendication 2, dans lequel :
- lesdits moyens d'émission E desdites ondes électromagnétiques émises Σₑ et lesdits moyens de réception R desdites ondes électromagnétiques réfléchies Σᵣ, lesdits moyens de comparaison C et lesdits moyens de traitement T sont associés audits moyens de propagation rayonnants P et sont disposés au sol, et
- lesdits moyens de réflexion R' desdites ondes électromagnétiques émises Σₑ sont supportés par ledit véhicule V.

4. Dispositif selon l'une quelconque des revendications 1 à 3, dans lequel lesdits moyens d'émission E sont des moyens d'émission radar.

5. Dispositif selon l'une quelconque des revendications 1 à 3, dans lequel lesdites ondes électromagnétiques émises Σₑ et réfléchies Σᵣ sont des ondes radars.

## Patentansprüche

1. Kommunikationsvorrichtung für die Ortung eines Fahrzeuges V, das sich entlang von Ausbreitungsmitteln P für elektromagnetische Wellen bewegt, mit:
- Sendemitteln E für gesendete elektromagnetische Wellen Σₑ,
- Reflexionsmitteln R' für die gesendeten elektromagnetischen Wellen Σₑ,
- Empfangsmitteln R für die von den Reflexionsmitteln R' reflektierten elektromagnetischen Wellen Σᵣ,
- Vergleichsmitteln C zum Vergleichen der gesendeten elektromagnetischen Wellen Σₑ und der von den Empfangsmitteln R ausgegebenen elektromagnetischen Wellen,
- Verarbeitungsmitteln T zum Verarbeiten des von den Vergleichsmitteln C erhaltenen Resultates, die eine Bestimmung des Abstandes D zwischen dem Fahrzeug V und den Reflexionsmitteln R' ermöglichen,
wobei die Ausbreitungsmittel P der gesendeten elektromagnetischen Wellen Σₑ und der reflektierten elektromagnetischen Wellen Σᵣ strahlende Aasbreitungsmittel sind, wobei die Vorrichtung **dadurch gekennzeichnet ist, daß**
- die gesendeten elektromagnetischen Wellen Σₑ sich zusammensetzen aus einer mit konstanter Amplitude gesendeten und frequenzmodulierten Trägerwelle, und die reflektierten elektromagnetischen Wellen Σᵣ sich aus einer frequenzmodulierten Trägerwelle zusammensetzen,
- die Reflexionsmittel R' die Frequenz der Trägerwelle der gesendeten elektromagnetischen Wellen Σₑ verschieben, um die reflektierten elektromagnetischen Wellen Σᵣ zu liefern,
- die Empfangsmittel R die Trägerwelle der reflektierten elektromagnetischen Wellen Σᵣ auf ihre Ursprungsfrequenz verschieben, um die von den Verarbeitungsmitteln T empfangenen elektromagnetischen Wellen Σ_{r'} zu liefern,
- die Verarbeitung des von den Vergleichsmitteln C erhaltenen Ergebnisses durch die Verarbeitungsmittel T sich auf eine Phasendifferenzmessung zwischen der Trägerwelle der gesendeten elektromagnetischen Wellen Σₑ und der Trägerwelle der empfangenen elektromagnetischen Wellen Σᵣ, bezieht.

2. Kommunikationsvorrichtung nach Anspruch 1, bei der die Sendemittel E der gesendeten elektromagnetischen Wellen Σₑ und die Empfangsmittel R der reflektierten elektromagnetischen Wellen Σᵣ, die Vergleichsmittel C und die Verarbeitungsmittel T sich an Bord des Fahrzeuges V befinden und
- die Reflexionsmittel R' der gesendeten elektromagnetischen Wellen Σₑ den strahlenden Ausbreitungsmitteln P zugeordnet sind und am Boden angeordnet sind.

3. Kommunikationsvorrichtung nach Anspruch 2, bei der
- die Sendemittel E der gesendeten elektromagnetischen Wellen Σₑ und die Empfangsmittel R der reflektierten elektromagnetischen Wellen Σᵣ, die Vergleichsmittel C und die Verarbeitungsmittel T den Strahlungsausbreitungsmitteln P zugeordnet sind und sich am Boden befinden, und daß
- die Reflexionsmittel R' für die gesendeten elektromagnetischen Wellen Σₑ sich an Bord des Fahrzeuges V befinden.

4. Vorrichtung nach einem der Ansprüche 1 bis 3, bei der die Sendemittel E Radar-Sendemittel sind.

5. Vorrichtung nach einem beliebigen der Ansprüche 1 bis 3, bei dem die gesendeten elektromagnetischen Wellen Σₑ und die reflektierten elektromagnetischen Wellen Σᵣ Radarwellen sind.

## Claims

1. Communications apparatus enabling a vehicle V travelling along propagation means P for propagating electromagnetic waves to be located, said communications apparatus including:
transmit means E for transmitting transmitted electromagnetic waves Σₑ;
reflection means R' for reflecting said transmitted electromagnetic waves Σₑ;
receive means R for receiving the reflected electromagnetic waves Σᵣ reflected by said reflection means R';
comparator means C for comparing said transmitted electromagnetic waves Σₑ with said electromagnetic waves issued from said receive means R; and
processing means T for processing the result obtained by said comparator means, so as to make it possible to determine the distance D between said vehicle V and said reflection means R';
said propagation means P for propagating said transmitted electromagnetic waves Σₑ and said reflected electromagnetic waves Σᵣ being radiating propagation means, said apparatus being **characterized in that**:
each of said transmitted electromagnetic waves Σₑ is composed of a frequency-modulated transmitted carrier wave of constant amplitude, and in which each of said reflected electromagnetic waves Σᵣ is composed of a frequency-modulated reflected carrier wave;
the reflection means R' transpose the frequency of the carrier wave of said transmitted electromagnetic waves Σₑ so as to give said reflected waves Σᵣ;
the receive means R transpose the carrier wave of said reflected electromagnetic waves Σᵣ back to its initial frequency so as to give received electromagnetic waves Σ_{r'} by the processing means T; and
the processing performed by the processing means T on the result obtained by said comparator means C relates to measuring the phase difference between the carrier wave of said transmitted electromagnetic waves Σₑ and the carrier wave of said received electromagnetic waves Σ_{r'}.

2. Communications apparatus according to claim 1, in which:
said transmit means E for transmitting said transmitted electromagnetic waves Σₑ, said receive means R for receiving said reflected electromagnetic waves Σᵣ, said comparator means C, and said processing means T are supported by said vehicle V; and
said reflection means R' for reflecting said transmitted electromagnetic waves Σₑ are associated with said radiating propagation means P, and are disposed on the ground.

3. Communications apparatus according to claim 2, in which:
said transmit means E for transmitting said transmitted electromagnetic waves Σₑ, said receive means R for receiving said reflected electromagnetic waves Σᵣ, said comparator means C, and said processing means T are associated with said radiating propagation means P, and are disposed on the ground; and
said reflection means R' for reflecting said transmitted electromagnetic waves Σₑ are supported by said vehicle V.

4. Apparatus according to any one of claims 1 to 3, in which said transmit means E are radar transmit means.

5. Apparatus according to any one of claims 1 to 3, in which both said transmitted electromagnetic waves Σₑ, and said reflected electromagnetic waves Σᵣ are radar waves.
